# EUROPEAN PATENT APPLICATION

(11) **EP 1 837 829 A1**
(43) Date of publication of application: **26.09.2007**
(21) Application number: 07251262.7
(22) Date of filing: 23.03.2007
(51) Int. Cl.: G06T 7/60, G06T 7/00

(54) **Method of computing spray parameters from optical patternation**

(30) Priority: 23.03.2006 US 386941
(71) Applicant: Pratt & Whitney Canada Corp., Longueuil QC J4G 1A1 (CA)
(72) Inventor: Prociw, Lev Alexander, Elmira, Ontario, N3B 1V1 (CA); Shafique, Harris, Longueuil, Quebec, J4G 2P5 (CA); Fiset, Patrice, Lasalle, Quebec, H8N 2X6 (CA)
(74) Representative: Leckey, David Herbert

(57) **Abstract**

The present invention provides a method of computing fuel nozzle spray parameters comprising steps of using a virtual or physical information collector (16) which is divided into a plurality of radially and circumferentially disposed regions to collect information relating to a spray of a fuel nozzle (34) and analyzing the information collected in the individual regions of the collector to determine quantitative values of the spray parameters of the fuel nozzle (34).

## Description

### TECHNICAL FIELD

The invention relates generally to what is referred to herein as "patternation", performing quantitative measurements of specific properties of particles within a particle field such as a spray, and more particularly, to an improved method of computing spray parameters from a fuel nozzle patternation.

### BACKGROUND OF THE ART

Fuel nozzles, such as in gas turbine engines, direct pressurized fuel from a manifold to one or more combustion chambers. Fuel nozzles also prepare the fuel for mixing with air prior to combustion. Therefore, the pattern and quantitative parameters of a fuel nozzle spray significantly affect combustion and thus the efficiency of engine performance. It is important to collect spray information to analyze spray parameters of fuel nozzles during a design stage of a new family of fuel nozzles and during the manufacturing process of every production batch of fuel nozzles, in order to ensure that newly designed fuel nozzles meet the requirements of the desired spray parameters for a gas turbine engine, and to be able to implement meaningful quality control of every production batch of fuel nozzles in accordance with the designed spray parameters, within allowed limits.

Fuel nozzle spray patternation technology has been used for quantitative analysis of a spray of a fuel nozzle to determine the quantitative spray parameters, however there is always room for improvement.

Accordingly, there is a need to provide an improved method of computing spray parameters of a fuel nozzle from the patternation thereof.

### SUMMARY OF THE INVENTION

It is therefore an object of this invention to provide a method of computing fuel nozzle spray parameters from a fuel nozzle patternator.

In one aspect, the present invention provides a method of computing fuel nozzle spray parameters from optical patternation information, which comprises: obtaining an image of a spray of a fuel nozzle from a fuel nozzle optical patternation system; radially and circumferentially dividing the image into a plurality of regions, the regions in different combinations forming annuli and sectors, respectively; and using information in the image to determine a quantity of spray distribution in each region.

In another aspect, the present invention provides method of computing fuel nozzle spray parameters, which comprises providing an information collector radially and circumferentially divided into a plurality of regions, the regions in different combinations forming annuli and sectors, respectively; using the information collector to collect information relating to a spray of a fuel nozzle; and analyzing information collected in the individual regions of the collector to determine quantitative values of the spray parameters of the fuel nozzle.

Further details of these and other aspects of the present invention will be apparent from the detailed description and figures included below.

### DESCRIPTION OF THE DRAWINGS

Reference is now made to the accompanying figures depicting aspects of the present invention, in which:
Figure 1 is a schematic cross-sectional view of a mechanical patternator used to measure spray parameters of a fuel nozzle according to one embodiment of the present invention;
Figure 2 is a top plane view of an opening of a liquid collector of the patternator of Figure 1, divided into annular and sectorial regions;
Figure 3, is a schematic illustration showing a fuel nozzle optical patternation system according to another embodiment of the present invention;
Figure 4 is an exemplary optical image of a spray of a fuel nozzle obtained from the fuel nozzle optical patternation system of Figure 3;
Figure 5 is a schematic illustration showing a virtual information collector used to collect light distribution information in the image of the spray of the fuel nozzle of Figure 4; and
Figure 6 is an illustration similar to that of Figure 5, showing the virtual information collector being further divided for information accuracy.

### DETAILED DESCRIPTION OF THE PREFERRED EMBODIMENTS

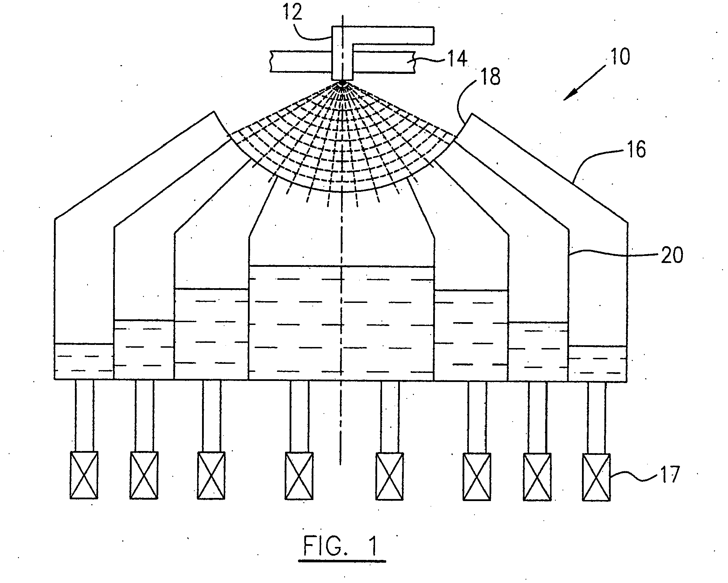

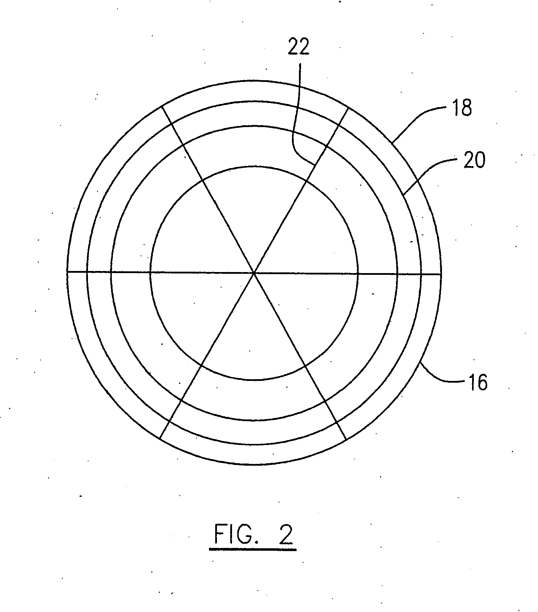

Referring to Figures 1 and 2, a mechanical patternator according to one embodiment of the present invention, which is generally indicated by numeral 10, is used to measure parameters of a spray generated by a nozzle 12. The patternator 10 generally includes a nozzle mounting apparatus 14 and a liquid collector 16 , for example, of a substantially conical shape at least at the upper portion thereof. The conical liquid collector 16 is positioned substantially coaxially with the fuel nozzle 12. A plurality of circumferential and radial partitioning walls 20, 22 divide the liquid collector 16 into a plurality of regions. In this embodiment, the liquid collector 16, as an example of the present invention, is divided into four annuli and six sectors, thereby providing twenty-four separate chambers, each representing one region. Each of the chambers defines a drain device 17 which is used to drain the fuel liquid accumulated in the chamber for quantitative analysis thereof.

The liquid collector 16 defines a top opening 18 in a portion of a sphericity, having a center thereof superposed onto the central orifice (not shown) of the fuel nozzle 12, as illustrated in Figure 1. Therefore, liquid droplets in the fuel spraying from the fuel nozzle 12 are collected in the individual chambers (regions). The individual annuli formed by every six circumferentially adjacent regions (see Figure 2) determine the radial mass distribution of the fuel spray (similar to cone-shaped angles, as illustrated in Figure 1). The individual sectors formed by every four radially adjacent regions provide a uniformity measurement of the spray which is used to determine the streakiness of the spray pattern of an acceptable fuel nozzle.

In operation, the fuel nozzle 12 being tested is secured in the nozzle mounting apparatus 14 above the liquid collector 16 at a predetermined height, based on the radius of the sphericity of the opening 18 of the liquid collector 16. The fuel nozzle 12 is connected to a spray booth (not shown) associated with the nozzle mounting apparatus 12, which provides fuel and air to the fuel nozzle 12, simulating the fuel and air supply in a gas turbine engine, and thereby enabling the nozzle 12 to spray into the collector 16 at a predetermined flow rate and a predetermined mixing ratio of the fuel and air. The fuel liquid is collected in the various regions and accumulates in the individual chambers (regions) until a predetermined total mass has been captured. The quantity of fuel in each annulus and each sector is then analyzed and compared against predetermined target values.

Spray parameters (together with a tolerance) such as radial spray distribution parameters, specify the quantity of fuel that can occupy each annulus. For example, the target spray distribution for a given nozzle may call for:
Annulus 1 >60%
Annulus 2 <20%
Annulus 3 <5%
Annulus 4 <2%

The predetermined allowable circumferential distribution variation of a specific nozzle family is specified by a parameter termed the Sector Uniformity Index (SUI) which is computed by measuring the mass of fuel in each sector and comparing this to the predetermined theoretical value that would be obtained from a perfect nozzle of said nozzle family. In a six-sector patternator, a perfect nozzle would spray 1/6 of the total fuel into each sector. The value 1/6 is the theoretical fraction for this patternator. To determine the SUI of a given nozzle, the following calculations must be conducted:
- In each sector, subtract the measured fraction from the theoretical fraction for the patternators to obtain a value of the difference,
- Square this value,
- Sum all these values together,
- Divide by the number of bins less 1, and then
- Calculate the square root of this value.

A perfect nozzle would have an SUI of zero. Acceptable values of up to 25 and 30, have been found to exist in typical production environments. For a given nozzle family, the acceptable SUI values would be specified as a value less than some maximum value (ie <25).

Adequate patternation from a nozzle is important to the health of an engine and as such, patternation measurement of each nozzle is highly desirable to maintain engine quality. To reduce the cost associated with the hardware and the time associated with measurement, optical patternation for fuel nozzles have been developed according to another embodiment of the present invention.

Inspection and characterization of fuel nozzle sprays using optical patternation of sprays do not measure liquid mass distribution directly, but rather quantify light in the density distribution of a spray optical image obtained from a planar laser light sheet intersecting the fuel spray generated from a fuel nozzle. The resulting optical spray image becomes a useful inspection record with which to quantify nozzle quality when certain laser lighting factors such as laser light sheet homogeneity, spreading of the light sheet, the efficiency with which light is scattered through different angles, etc., are appropriately adjusted.

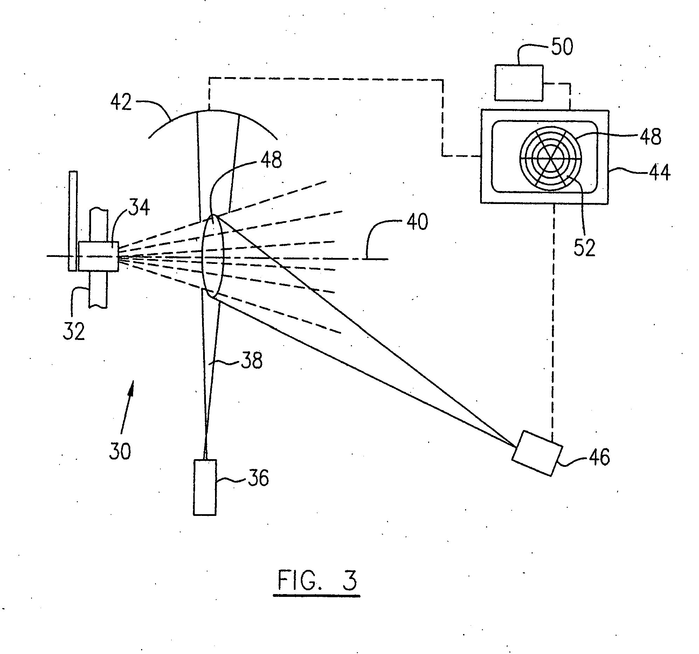

Referring to Figures 3-5, a fuel nozzle optical patternation system, generally indicated by numeral 30, includes a nozzle mounting apparatus 32 for securing a nozzle 34 in an appropriate position for testing and inspection. A planar laser sheet generator 36 is positioned such that a planar laser sheet 38 is generated therefrom to intersect the spray from the fuel nozzle 34, substantially normal to the central axis 40 of the fuel nozzle 34. An array of diodes 42 is disposed at a side of the spray opposite to the location of the planar laser sheet generator 36, and is aligned with the planar laser sheet generator 36 to receive the planar laser sheet 38. The array of diodes 42 is connected to a computer 44 to which data is sent regarding the information of the light of the planar laser sheet 38, for analysis. A digital camera 46 is provided to record an optical image 48 of the spray generated by the fuel nozzle 34, created by the planar laser sheet 38. The digital camera 46 is preferably located a side of the planar laser sheet 38 opposite to the location of the fuel nozzle 34, and at an angle relative to the central axis 40 of the fuel nozzle 34. The digital camera 46 is preferably connected directly to the computer 44 for sending digital data of the optical image 48 thereto and the optical image 48 can be displayed on a monitor screen of the computer 44. However, a direct connection between the digital camera 46 and the computer 44 is not necessary as the digital data of the optical image 48 can be recorded by the digital camera 46 on a computer readable medium which can then be read by the computer 44 offline.

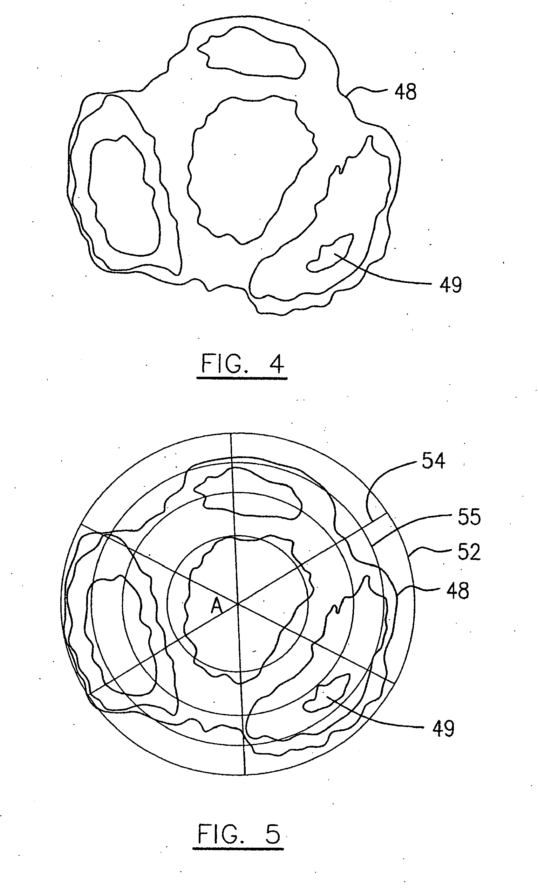

The optical image 48 is formed by fuel droplets in the spray scattering the light out of the plane defined by the planar laser sheet 38 and is recorded by the digital camera 46. Corrections are preferably made to the image data recorded by the digital camera 48 in order to account for shadowing effects, light plane nonuniformities and camera view angle. Thus, the substantially true optical image 48 of the cross-section of the spray is obtained in the computer 44 and displayed on the monitor screen thereof. An example of the optical image recorded in the computer 44 is shown in Figure 4.

The variation in colour shown in the optical image 48 corresponds to the variation in light intensity captured by the digital camera 46. High light intensity levels such as indicated by numeral 49, correspond to zones of high spray density. Therefore, the optical image 48 can be converted to show the annular nature of the spray distribution as it exists in a plane downstream of the fuel nozzle 34, as defined by the planar laser sheet 38.

The method for computing fuel nozzle spray parameters, such as radial distribution parameters and SUI values of the spray generated by the fuel nozzle 34 is similar to the method described with respect to the mechanical patternator 10 illustrated in Figures 1 and 2, and similar procedures will not be repeated herein. Nevertheless, in the fuel nozzle optical patternation system 30, there is no need for a physical liquid collector as used in the mechanical patternator 10 of Figure 1, because information regarding the spray parameters is not directly collected from the droplets in the spray, but from the light scattered by the droplets in the spray. For computing spray parameters from the image 48, the light intensity distribution on the image plane can be partitioned into regions similar to that of the mechanical patternator. The quantity of light in any given annulus or sector divided by the total light replaces the fraction of fuel flow in the various regions of the mechanical system. Therefore, a virtual information collector is needed and can be conveniently created by software 50 associated with the computer 44.

The virtual information collector is formed by superposing a partitioning image 52 onto the optical image 48 of the spray generated by the nozzle 34. Similar to the top view of the opening 18 of the liquid collector 16 (see Figures 1 and 2), the partitioning image 52 includes a plurality of radially extending lines 54 and circumferentially extending lines 55 in combination dividing the optical image 48 into individual regions (not indicated). These individual regions in different groups form respective annuli and sectors, similar to those in the liquid collector 16 of Figures 1 and 2.

The spray parameters are basically measurements of distribution about an origin indicated by center A of the partitioning image 52 which represents a fixed spatial collector origin, as used in the mechanical patternator of Figures 1 and 2. In the optical patternation system 30, center A of the partitioning image is located by identifying a unique pixel in the digital image 48 corresponding to a point in a measurement plane defined by the planar laser sheet 38. At this point, a system central axis which theoretically represents the central axis 40 of the fuel nozzle 34, extends through the planar laser sheet 38. The partitioning image 52 created by the software 50 and displayed on the monitor screen of the computer 44 is thus centralized with the central axis of the system. Therefore, the parameters calculated from the optical image 48 represent the fuel nozzle characteristics relative to the central axis 40 of the fuel nozzle 34.

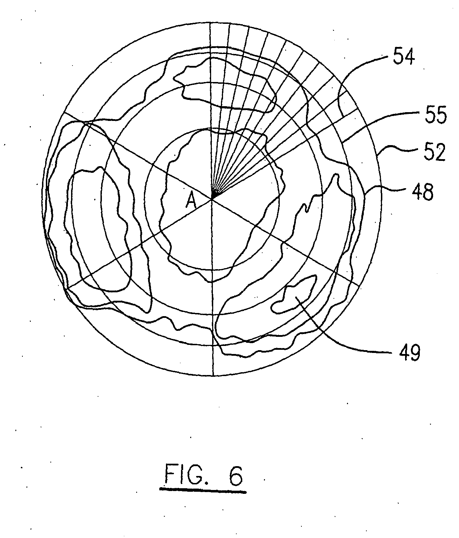

Due to the fact that the partitioning image is created by software 50, any suitable computational method can be utilized from the digital image produced by the optical system 30. For example, a much finer region distribution (discretization) as illustrated in Figure 6, can be conveniently developed to capture finer details such as very fine streaks exhibited in the spray, which are overlooked in an information collector having coarser regions particularly with a mechanical chamber arrangement.

As previously described, a number of laser lighting factors such as laser light sheet homogeneity, spreading of the light sheet, efficiency with which light is scattered through different angles, etc., will affect the optical image of the spray of the fuel nozzle in testing. Therefore, it is preferable to adjust the light parameters and integration formulas in a test of a given nozzle which has known spray parameters, obtained for example, from the mechanical patternator 10 of Figure 1. The adjustment of the light parameters and integration formulas are completed when the spray parameters obtained from the optical system 30 substantially match the known parameters from the mechanical patternator.

Although the optical patternation system measures the quantity of light scattered by the spray rather than actual fuel mass, it is perfectly capable of discerning the quality of a spray, consistency of production and how closely the spray distribution of a given nozzle conforms to the target distribution predetermined during initial development of the nozzle family.

The above description is meant to be exemplary only, and one skilled in the art will recognize that changes may be made to the embodiments described without departure from the scope of the invention disclosed. Modifications which fall within the scope of the present invention will be apparent to those skilled in the art, in light of a review of this disclosure, and such modifications are intended to fall within the appended claims.

## Claims

1. A method of computing fuel nozzle spray parameters from optical patternation information, the method comprising:
(a) obtaining an image (48) of a spray of a fuel nozzle (34) from a fuel nozzle optical patternation system (30);
(b) radially and circumferentially dividing the image (48) into a plurality regions, the regions in different combinations forming annuli and sectors, respectively; and
(c) using information in the image (48) to determine a quantity of spray distribution in each region.

2. The method as defined in claim 1 wherein step (c) is practiced by measuring light intensity distribution in each region to determine the quantity of the spray distribution in each region.

3. The method as defined in claim 1 or 2 comprising a step of adjusting light parameters and integration formulas of the fuel nozzle optical patternation system in a test of a given fuel nozzle (34) with known spray parameters thereof, in order to adjust parameter values obtained from an image of a spray of the given fuel nozzle (34) to substantially match the known spray parameters thereof, the adjustment step being performed prior to performing step (a) for the fuel nozzle (34) to be tested.

4. The method as defined in claim 1, 2 or 3 wherein step (b) is practiced using a partitioning image (52) superposed on the image (48) of the spray of the fuel nozzle (34).

5. The method as defined in claim 4 wherein the partitioning image (52) is centralized with a fixed spray origin of the fuel nozzle optical patternation system (30).

6. The method as defined in claim 4 or 5 wherein the partitioning image (52) is created by software associated with the fuel nozzle optical patternation system (10).

7. The method as defined in any preceding claim further comprising a step of comparing the quantity of the spray distribution in each region to a quantity of a target distribution in each region.

8. The method as defined in any preceding claim further comprising a step of calculating a quantity of spray distribution in each annulus in order to determine radial distribution parameters of the fuel spray nozzle (34).

9. The method as defined in any preceding claim further comprising a step of calculating a quantity of spray distribution in each sector to determine a Sector Uniformity Index value of the fuel spray nozzle (34).

10. A method of computing fuel nozzle spray parameters, the method comprising:
(a) providing an information collector radially and circumferentially divided into a plurality of regions, the regions in different combinations forming annuli and sectors, respectively;
(b) using the information collector to collect information relating to a spray of a fuel nozzle (34); and
(c) analyzing the information collected in the individual regions of the collector to determine quantitative values of the spray parameters of the fuel nozzle.

11. The method as defined in claim 10 further comprising a step of obtaining an optical patternation image (48) of the spray of the fuel nozzle (34) from a fuel nozzle optical patternation system (30), this step being performed prior to step (a).

12. The method as defined in claim 11 wherein step (a) is practiced by providing a partitioning image (52) created by software of the fuel nozzle optical patternation system (30), the partitioning image (52) being superposed on the image (48) of the spray of the fuel nozzle, thereby forming a virtual information collector.

13. The method as defined in claim 12 wherein step (c) is practised by measuring light intensity distribution in each region to determine the quantity of spray distribution in each region.

14. The method as defined in claim 10 wherein the information collector comprises a conical container (16) having an opening (18) and respective radial and circumferential partitioning walls (20, 22), thereby forming separate chambers representing the regions of the information collector, for collecting fuel drops of the spray of the fuel nozzle (34) spread over the regions of the information collector (16).
